# EUROPEAN PATENT APPLICATION

(11) **EP 4 513 631 A1**
(43) Date of publication of application: **26.02.2025**
(21) Application number: 23192910.0
(22) Date of filing: 23.08.2023
(51) Int. Cl.: H01M 10/6556, H01M 10/6568, H01M 10/48

(54) **THERMAL MANAGEMENT MODULE**

(71) Applicant: Röchling Automotive SE, 68165 Mannheim (DE)
(72) Inventor: Ganthaler, Christoph, 39055 Laives BZ (IT); Dill, Peter, 85051 Ingolstadt (DE); Tremonti, Claudia, 39100 Bolzano (IT)
(74) Representative: Ullrich & Naumann PartG mbB

(57) **Abstract**

A thermal management module (110) for controlling the temperature of a battery pack in a vehicle, is disclosed. The thermal management module (110) comprises
- at least one fluid channel (112) for guiding a cooling fluid (122) through the thermal management module (110), wherein the fluid channel (112) consists of two or three plastic components (124), wherein the fluid channel (112) comprises at least one inlet (114) and at least one outlet (116);
- at least one fluid pump (118) for driving a movement of the cooling fluid (122) through the fluid channel (112), wherein the fluid pump (118) is fixed to the fluid channel (112);
- at least one heating element (120) arranged at least partially within the fluid channel (112), such that the cooling fluid (122) is heatable by the heating element (120).

Further, a module manufacturing method of manufacturing a thermal management module (110) is disclosed.

## Description

### Technical Field

The invention relates to a thermal management module for controlling a temperature of a battery pack in a vehicle. Further, the invention relates to a module manufacturing method of manufacturing a thermal management module. The devices and methods according to the present invention may generally be applied in the field of electrical power storage used in vehicles, such as in the field of electrical and/or electrochemical energy storage in vehicles. Specifically, the invention may be applied in the field of electro mobility, such as in fuel cell, hybrid and/or electric vehicles, e.g. in cars and/or trucks. Other applications however are feasible.

### Background art

For managing and/or controlling the temperature of a battery pack in a vehicle generally thermal management modules are used. Typically, thermal management modules comprise cooling and/or heating means for preventing the vehicle's battery pack from overheating and/or undercooling.

CN 110429357 A describes an expansion pot, a battery thermal management system, and a vehicle. The expansion pot includes a housing and a heater, wherein a liquid inlet and a liquid outlet are formed on the housing; a cavity for accommodating a coolant is formed in the housing; and the heater is arranged in the cavity for heating the coolant in the cavity. CN 112397806 A describes a battery cold plate integrated with a heating function, a power battery system and a new energy vehicle. The battery cold plate is attached to a battery module and comprises a cover plate and a bottom plate, heat dissipation flow channels are formed in the cover plate and/or the bottom plate, the inlet ends and the outlet ends of the heat dissipation flow channels are in fluid communication with a fluid inlet pipe and a fluid outlet pipe respectively, and the heat dissipation flow channels are multiple columns of flow channels arranged in parallel. The battery cold plate comprises heating elements and cooling fins corresponding to the heating elements in position, and the heating elements are arranged corresponding to the areas among the multiple columns of flow channels.

US 2016/020496 A1 describes a battery pack, which includes a battery cell, a thermal interface material adjacent the battery cell and a heater element integrated with the thermal interface material. Further described is a method, comprising monitoring at least one temperature condition of a battery pack that includes a battery cell, a thermal interface material and a heater element integrated with the thermal interface material; and conditioning the battery cell with the heater element if the at least one temperature condition drops below a predefined threshold value.

Despite the advantages involved in known thermal management modules, several technical challenges remain. Thus, usually, thermal management modules are expansive and include many individual components that require a lot of installation space, complicating both manufacturing and assembly and causing high costs.

### Problem to be solved

It is therefore desirable to provide devices and methods, which address the above-mentioned shortcomings of known devices and methods. Specifically, a reasonably sized thermal management module shall be proposed, which allows for a simple assembly and manufacturing.

### Summary

This problem is addressed by a thermal management module for controlling a temperature of a battery pack in a vehicle and a module manufacturing method of manufacturing a thermal management module with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a thermal management module for controlling the temperature of a battery pack in a vehicle, specifically in an electrically powered vehicle, is proposed. The thermal management module comprises at least one fluid channel for guiding a cooling fluid through the thermal management module. The fluid channel consists of two or three plastic components. The fluid channel comprises at least one inlet and at least one outlet. Further, the thermal management module comprises at least one fluid pump for driving a movement of the cooling fluid through the fluid channel, wherein the fluid pump is fixed to the fluid channel, i.e. on a protrusion of the fluid channel. Further, the thermal management module comprises at least one heating element arranged at least partially within the fluid channel, such that the cooling fluid is heatable by the heating element.

The term "thermal management module" as used herein is a broad term and is to be given its ordinary and customary meaning to a person of ordinary skill in the art and is not to be limited to a special or customized meaning. The term specifically may refer, without limitation, to an arbitrary system configured for generating and/or establishing a temperature in a vehicle's battery pack that is within a predefined operating and/or working range. In particular, the thermal management module may be or may comprise a plurality of elements for adapting and/or maintaining a predefined temperature by adding or withdrawing thermal energy to or from the battery pack. For this purpose, the thermal management module may comprise at least one heating means and optionally at least one cooling means.

The term "fluid channel" as used herein is a broad term and is to be given its ordinary and customary meaning to a person of ordinary skill in the art and is not to be limited to a special or customized meaning. The term specifically may refer, without limitation, to a pipe and/or tube having an arbitrarily shaped, closed cross section and may be configured for guiding the cooling fluid, i.e. providing guidance to a flow direction of the cooling fluid. The fluid channel may specifically be or may comprise at least one wall, such as an enclosing wall, for continuously enclosing an interior space through which the cooling fluid may flow from the fluid channel's inlet to the fluid channel's outlet. In particular, the fluid channel, e.g. its wall, consists of two or three plastic components and may thus comprise at least one plastic material. As used herein, the term "plastic component" may specifically refer to an arbitrary part of an element comprising at least one plastic material, such as one or more of a thermoplastic material and a thermosetting material. In particular, the plastic components may be individual parts or objects from which the fluid channel is assembled. Thus, the plastic components may be configured for, by being combined, forming the fluid channel. As an example, the fluid channel may have integrated the function of a housing, such as of an enclosing and/or fixing means for providing an airtight space to enclosing the cooling fluid, while at the same time providing bearing surface for further components of the thermal management module, such as for the at least one fluid pump and the at least one heating element.

The term "cooling fluid" as used herein is a broad term and is to be given its ordinary and customary meaning to a person of ordinary skill in the art and is not to be limited to a special or customized meaning. The term specifically may refer, without limitation, to an arbitrary coolant, such as a fluid cooling agent. In particular, the cooling fluid is configured for removing heat and/or for conducting heat to a heat sink. As an example, the cooling fluid may remove and/or dissipate heat in the form of thermal energy either by an increase of the cooling fluid's temperature of by a change in its state of aggregation, e.g. in the form of transformation enthalpy. The cooling fluid may be or may comprise at least one liquid, such as one or more of water, glycerin, ethylene glycol, ethanol, propylene glycol and oil. Additionally or alternatively, the cooling fluid may be or may comprise at least one gaseous fluid, such as for example air.

In particular, the cooling fluid may be configured for cooling the battery pack. However, the cooling effect may also be inversed, i.e. allowing a heating instead of cooling of the battery pack. Thus, though the cooling fluid is primarily described in connection with its purpose of cooling, it is explicitly also configured for heating, i.e. increasing the temperature, of the battery pack, depending on an actual temperature of the battery pack in comparison to a preferred or predefined operating and/or working temperature range of the battery pack.

The term "fluid pump" as used herein is a broad term and is to be given its ordinary and customary meaning to a person of ordinary skill in the art and is not to be limited to a special or customized meaning. The term specifically may refer, without limitation, to an arbitrary device configured for moving fluids, such as liquids and/or gases, specifically the cooling fluid, by mechanical action, typically converted from electrical energy into hydraulic energy. In particular, as used herein the fluid pump may be or may comprise a positive-displacement pump. As an example, the fluid pump may comprise at least one impeller and a housing in which the impeller may be positioned, such that by rotating the impeller in the housing the fluid, i.e. the cooling fluid, may be moved. As an example, the housing of the fluid pump may be part of the fluid channel, such as at least one part of the enclosing wall of the fluid channel.

The term "heating element" as used herein is a broad term and is to be given its ordinary and customary meaning to a person of ordinary skill in the art and is not to be limited to a special or customized meaning. The term specifically may refer, without limitation, to an arbitrary system configured for, by increasing its own temperature, providing heat and/or thermal energy to its surrounding matter. The heating element may for example be or may comprise an electric heating element configured for generating thermal energy by conversion from electrical energy. Specifically, the heating element, by directly or indirectly contacting the cooling fluid within the fluid channel, may be configured for transferring thermal energy onto the cooling fluid, thereby for example heating up the cooling fluid. In particular, the heating element may be arranged at least partially within the fluid channel, such that the cooling fluid can be heated by the heating element.

The fluid channel may fully encircle the heating element in at least one plane. Specifically, the fluid channel may fully encircle the heating element in at least two orthogonal planes. Thus, the heating element may be arranged fully or partially within a wall of the fluid channel, for example such that the heating element one or more of protrudes from the wall of the fluid channel into a flow path of the cooling fluid, forms part of the wall of the fluid channel or is arranged within the wall of the fluid channel.

Additionally or alternatively, the heating element may be arranged inside the fluid channel. Specifically, the heating element may be arranged inside the fluid channel, such that the heating element is arranged within a flow path of the fluid, i.e. the cooling fluid, in the fluid channel. As an example, the heating element may be arranged within the fluid channel, such that it is surrounded by the cooling fluid from at least three sides.

Additionally or alternatively, the heating element may protrude into the fluid channel, such that the heating element penetrates a wall of the fluid channel. In particular, the heating element may penetrate at least one of the two or three plastic components of the fluid channel. Specifically, the heating element may protrude into the fluid channel, such that at least one part of the heating element is arranged outside of the fluid channel, wherein at least one other part of the heating element is arranged within the fluid channel, protruding into the flow path of the cooling fluid.

The heating element may be or may comprise at least one resistive heat wire. Thus, as an example, the heating element may be or may comprise at least one metal wire that, when electrified, i.e. charged with electric current, may transform the electric energy into thermal energy, due to its own electrical resistance.

The thermal management module may further comprise at least one temperature sensor for measuring a temperature of the cooling fluid. The temperature sensor may specifically be arranged within the fluid channel. As an example, the temperature sensor may either be arranged within a wall of the fluid channel and/or fully or partially in a flow path of the cooling fluid within the fluid channel.

The thermal management module may further comprise at least one mixing valve for mixing the cooling fluid from different parts of the fluid channel, i.e. cooling fluid having different temperatures. As an example, the fluid channel may comprise different parts, such as one or more side arms and/or feeding lines. The mixing valve may be arranged in the flow path of the fluid channel and may specifically be fixed to the fluid channel, such as to the wall of the fluid channel. As an example, the mixing valve may be fixed to one of the at least one of the two or three plastic components of the fluid channel. The mixing valve may be configured for mixing the cooling fluid from different parts of the fluid channel for example having different temperatures. Thus, the mixing valve, by mixing cooling fluids having different temperatures may be setting the temperature of the cooling fluid, which reaches the outlet and then may flow toward the battery pack. The mixing valve may specifically be one or more of a two-way mixing valve and multiple way mixing valve, in particular a three-way mixing valve.

The material of a first one of the plastic components may differ from a material of a second one of the plastic components. In particular, the material of a first one of the two or three plastic components may be different from the material of a second one of the two or three plastic components. For example, at least two of the two or three plastic components may have different materials. Specifically, the two or three shells are made out of the same material in order to be joinable by welding. Alternatively however, the material of the first one of the plastic components may be the same as the material of the second one of the plastic components, e.g. the materials of the first and second plastic components may coincide with each other. Specifically, the material of the first one of the two or three plastic components may be the same as the material of the second one of the two or three plastic components. In particular, all plastic components may be made of the same material. As an example, there may be only one material for all housing parts.

At least one of the plastic components of the fluid channel may comprise a plastic material selected from the group consisting of: a thermoplastic material, such as Polypropylene (PP) and/or Polyamide (PA); a thermosetting material.

In a further aspect of the present invention, a module manufacturing method of manufacturing a thermal management module is proposed. The module manufacturing method, also referred to as method, comprises the following steps. The steps may be performed in the given order. Still, a different order is possible. The method may comprise additional steps which are not mentioned. It is further possible to perform one or more or all of the method steps repeatedly. Further, two or more of the method steps may be performed simultaneously or in a timely overlapping fashion.

The module manufacturing method comprises the following steps:
a) generating two or three plastic components for a fluid channel in an injection molding process;
b) providing at least one fluid pump and arranging the fluid pump on one of the plastic components;
c) providing at least one heating element and arranging the heating element on one of the plastic components;
d) joining the two or three plastic components in one or more welding processes, thereby generating the fluid channel.

As an example, in step b), at least a part of the fluid pump may be provided, such as for example an impeller. In particular, the housing of the fluid pump may be part of the fluid channel, e.g. at least one part of the enclosing wall of the fluid channel. Thus, in step b) instead of providing a complete fluid pump, a fluid pump without a housing may be provided, such that by arranging the part of the fluid pump without the housing on the plastic component, the fluid channel generated in step d) by joining the plastic components, may function as the fluid pump's housing.

Further, the method may, before performing step d), further comprise:
e) providing at least one temperature sensor and arranging the temperature sensor on one of the plastic components.

Additionally or alternatively, the method may, before performing step d), further comprise:
f) providing at least one mixing valve, specifically one or more of a two-way mixing valve and a three-way mixing valve, and arranging the mixing valve on one of the plastic components.

As an example, the module manufacturing method may be configured for manufacturing the thermal management module as described herein. Thus, for possible definitions and options, reference may be made to the description of the thermal management module as provided above or as further outlined below.

The proposed devices and methods provide a large number of advantages over known devices and methods of similar kind. In particular, the devices and methods according to the present application may, e.g. due to its set-up, allow for a more efficient cooling and/or heating of the battery pack.

Furthermore, the proposed devices and methods may reduce assembly and manufacturing complexity. Specifically, the proposed thermal management module may have a reduced number of components compared to known devices. In particular, the proposed thermal management module and manufacturing method may allow for less individual parts, e.g. the fluid channel consists of only two or three plastic components. This may specifically help reduce manufacturing costs and complexity of the assembly. For example, by a reduced number of interfaces and/or boundary surfaces, i.e. when assembling the components to form the fluid channel, compared to known devices and methods.

Summarizing and without excluding further possible embodiments, the following embodiments may be envisaged:
Embodiment 1: A thermal management module for controlling the temperature of a battery pack in a vehicle, specifically in an electrically powered vehicle, the thermal management module comprising
   - at least one fluid channel for guiding a cooling fluid through the thermal management module, wherein the fluid channel consists of two or three plastic components, wherein the fluid channel comprises at least one inlet and at least one outlet;
   - at least one fluid pump for driving a movement of the cooling fluid through the fluid channel, wherein the fluid pump is fixed to the fluid channel, i.e. on a protrusion of the fluid channel;
   - at least one heating element arranged at least partially within the fluid channel, such that the cooling fluid is heatable by the heating element.
Embodiment 2: The thermal management module according to the preceding embodiment, wherein the fluid channel fully encircles the heating element in at least one plane, specifically in at least two orthogonal planes.
Embodiment 3: The thermal management module according to any one of the preceding embodiments, wherein the heating element is arranged inside the fluid channel, such that the heating element is arranged within a flow path of the cooling fluid in the fluid channel.
Embodiment 4: The thermal management module according to any one of embodiments 1 and 2, wherein the heating element protrudes into the fluid channel, such that the heating element penetrates a wall of the fluid channel, i.e. penetrates one of the two or three plastic components.
Embodiment 5: The thermal management module according to any one of the preceding embodiments, wherein the heating element comprises at least one resistive heat wire.
Embodiment 6: The thermal management module according to any one of the preceding embodiments, further comprising at least one temperature sensor for measuring a temperature of the cooling fluid, wherein the temperature sensor is arranged within the fluid channel.
Embodiment 7: The thermal management module according to any one of the preceding embodiments, further comprising at least one mixing valve for mixing the cooling fluid from different parts of the fluid channel, i.e. cooling fluid having different temperatures, wherein the mixing valve is arranged in a flow path of the fluid channel and fixed to the fluid channel.
Embodiment 8: The thermal management module according to the preceding embodiment, wherein the mixing valve is one or more of a two-way mixing valve and a multiple-way mixing valve, in particular a three-way mixing valve.
Embodiment 9: The thermal management module according to any one of the preceding embodiments, wherein the material of a first one of the plastic components coincides with the material of a second one of the plastic components.
Embodiment 10: The thermal management module according to any one of the preceding embodiments, wherein at least one of the plastic components of the fluid channel comprises a plastic material selected from the group consisting of a thermoplastic material, such as Polypropylene (PP) and/or Polyamide (PA); a thermosetting material.
Embodiment 11: A module manufacturing method of manufacturing a thermal management module, the method comprising:
   a) generating two or three plastic components for a fluid channel in an injection molding process;
   b) providing at least one fluid pump and arranging the fluid pump on one of the plastic components;
   c) providing at least one heating element and arranging the heating element on one of the plastic components;
   d) joining the two or three plastic components in one or more welding processes, thereby generating the fluid channel.
Embodiment 12: The module manufacturing method according to the preceding embodiment, wherein the method, before performing step d), further comprises:
   e) providing at least one temperature sensor and arranging the temperature sensor on one of the plastic components.
Embodiment 13: The module manufacturing method according to any one of the preceding embodiments referring to a module manufacturing method, wherein the method, before performing step d), further comprises:
   f) providing at least one mixing valve, specifically one or more of a two-way mixing valve and a three-way mixing valve, and arranging the mixing valve on one of the plastic components.
Embodiment 14: The module manufacturing method according to any one of the preceding embodiments referring to a module manufacturing method, wherein the module manufacturing method is configured for manufacturing a thermal management module according to any one of the preceding embodiments referring to a thermal management module.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figures 1 and 2: show different embodiments of a thermal management module in a schematic top plane views;
- Figure 3: shows an embodiment of a thermal management module in a schematic side view;
- Figures 4a to 4c: show an embodiment of a thermal management module in a perspective view during different stages of a module manufacturing method; and
- Figures 5 and 6: show different flow charts of a module manufacturing method.

### Detailed description of the embodiments

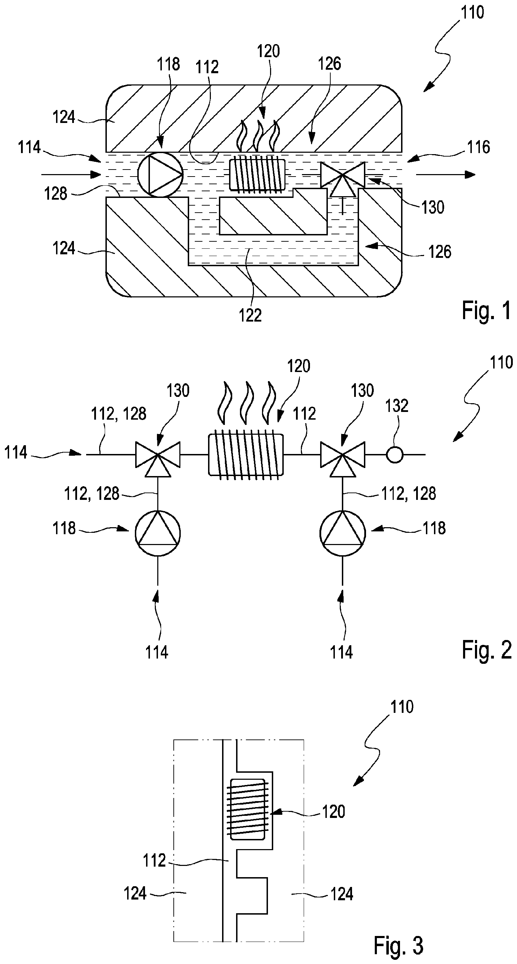

In Figures 1 and 2, schematic top plane views of different embodiments of a thermal management module 110 are illustrated. The thermal management module 110 is configured for controlling the temperature of a battery pack in a vehicle and comprises at least one fluid channel 112 having an inlet 114 and an outlet 116, at least one fluid pump 118 and at least one heating element 120. The fluid pump 118 is configured for driving a movement of the cooling fluid 122 though the fluid channel 112 and is fixed to the fluid channel 112. The heating element 120 is arranged at least partially within the fluid channel 112, such that the cooling fluid 122 is heatable by the heating element 120. The arrows in Figure 1 indicate the direction of flow of the cooling fluid 122 into the thermal management module 110 through the inlet 114 and out of the thermal management module 110 through the outlet 116. In particular, the cooling fluid 122, after leaving the thermal management module 110 may be configured to flow towards the battery pack, to influence the battery pack's temperature, i.e. controlling the temperature of the battery pack.

The fluid channel 112 is configured for guiding a cooling fluid 122 through the thermal management module 110 and consists of two or three plastic components 124. As an example, the fluid channel 112 may be formed, e.g. in conjunction, by the plastic components 124 being joined together. The fluid channel 112 may comprise different parts, such as one or more side arms 126 and/or feeding lines 128. For example, when flowing through the fluid channel 112, the stream of cooling fluid 122 may split into the different parts, e.g. the side arms 126, of the fluid channel 112 and may flow together at a joining point, in which the side arms 126 of the fluid channel 112 may be joint together again, before reaching the outlet 116. Such a set-up is exemplarily illustrated in Figure 1. Alternatively, as exemplarily illustrated in Figure 2, the fluid channel 112 may comprise a plurality of inlets 114, such that cooling fluid 122 may enter into the thermal management module 110 through more than one feeding line 128 comprised by the fluid channel 112. In Figure 2, as opposed to the illustration chosen for Figure 1, the fluid channel 112 and its parts, i.e. the feeding lines 128, are illustrated by simple lines to provide a better overview.

The thermal management module 110 may further comprise at least one mixing valve 130 for mixing the cooling fluid 122 from different parts of the fluid channel 112. The mixing valve 130 may be arranged in a flow path of the fluid channel 112 and may be fixed to the fluid channel 112. In particular, the cooling fluid from different parts of the fluid channel 112 may have different temperatures. As an example, the cooling fluid 122 from the lower side arm 126 of Figure 1 or of the feeding line 128 on the right side of Figure 2, may have a lower temperature than the cooling fluid 122 heated up by the heating element 120 of the part of the fluid channel 112 illustrated horizontally in both Figures 1 and 2. The mixing valve 130, by mixing the cooling fluid 122 from the different parts of the fluid channel 112 may set the temperature of the cooling fluid 122 that reaches the outlet 116. Additionally or alternatively, the mixing valve 130 may be configured for mixing cooling fluid 122 from different parts of the fluid channel 112 having different flow speeds, thereby setting the speed with which the cooling fluid 122 flows through the fluid channel 112. The thermal management module 110 may comprise a plurality of mixing valves 130.

Additionally or alternatively, the thermal management module 110 may comprise a plurality of fluid pumps, e.g. for controlling the speed with which the cooling fluid 122 flows through the fluid channel 112. Further, additionally or alternatively, a plurality of heating elements 120 may be comprised by the thermal management module 110 for setting the temperature of the cooling fluid 122 that reaches the outlet 116. Further, additionally or alternatively, the thermal management module 110 may comprise at least one temperature sensor 132 for measuring the temperature of the cooling fluid 122. The temperature sensor 132 may be arranged within the fluid channel 112.

In Figure 3, a schematic side view of an embodiment of a thermal management module 110 are illustrated. The fluid channel 112 consists of two or three plastic components 124, wherein, as an example, at least one of the plastic components 124 may comprise a plurality of protrusions and/or recesses to accommodate one or more of the heating element 120 and/or the fluid pump 118. Further protrusions and/or recesses may be present on the plastic components 124 for accommodating other parts of the thermal management module 110, such as for example one or more mixing valve 130 and/or temperature sensor 132.

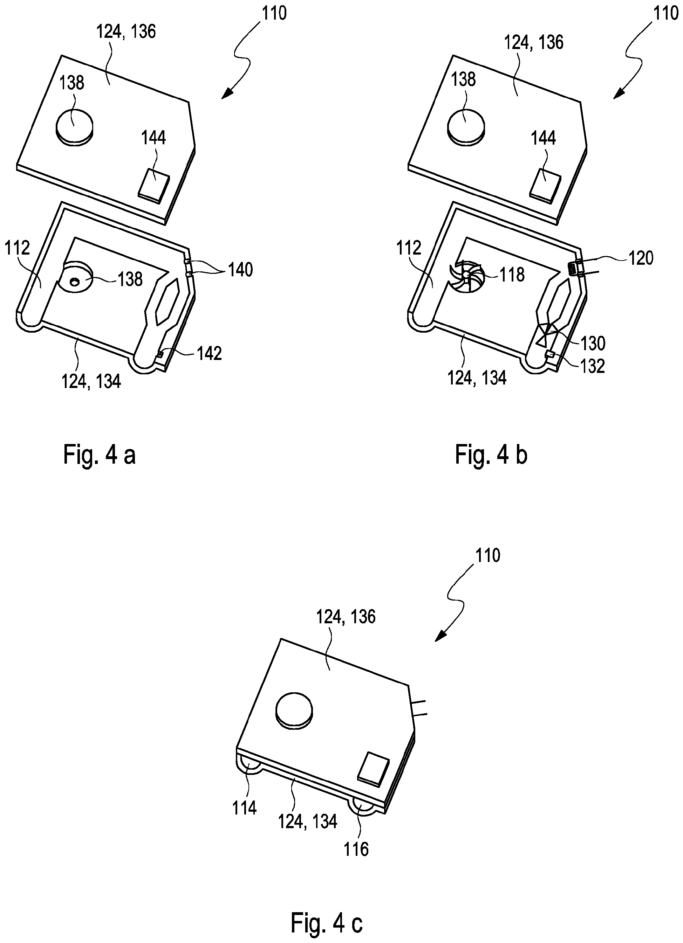

The heating element 120 may be arranged at least partially inside the fluid channel 112. Thus, the heating element 120 may be arranged within a flow path of the cooling fluid 122 in the fluid channel 112, as exemplarily illustrated in Figures 1 and 3. Alternatively, the heating element 120 may be arranged to protrude into the fluid channel 112, such that the heating element 120 penetrates a wall of the fluid channel 112, as exemplarily illustrated in Figures 4b and 4c. In particular, the heating element 120 may penetrate one of the two or three plastic components 124 of the fluid channel 112.

Figures 4a to 4c illustrate an embodiment of a thermal management module 110 in a perspective view during different stages of a module manufacturing method. In particular, the thermal management module 110 may comprise the fluid channel 112 consisting of two plastic components 124, one carrier component 134 and one lid component 136. As an example, one or both of the carrier component 134 and the lid component 136 may comprise at least one fluid pump protrusion 138, such as a protrusion for the fluid pump 118, i.e. for an impeller of the fluid pump 118. Furthermore, at least one of the carrier component 134 and the lid component 136 may comprise at least one heating element recess 140 through which the heating element 120 may protrude into the fluid channel 112. Further, one or both of the carrier component 134 and the lid component 136 may comprise at least one sensor recess 142 and/or at least one valve recess 144 for accommodating at least one of the temperature sensor 132 and the mixing valve 130.

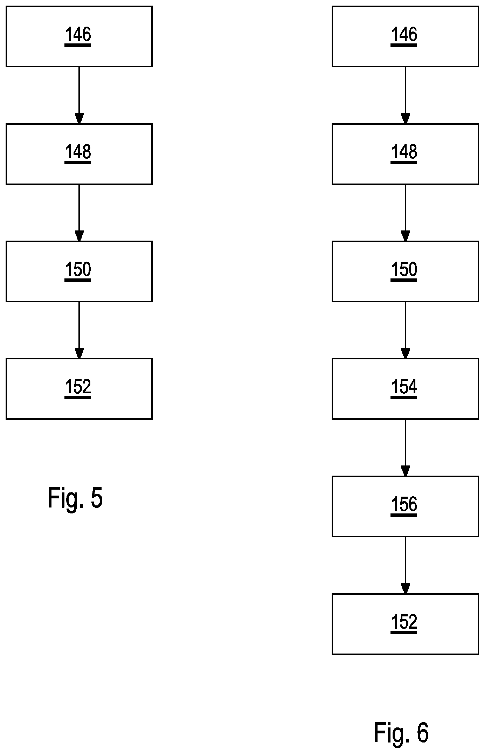

Figures 5 and 6 illustrate different flow charts of a module manufacturing method of manufacturing a thermal management module 110. The method comprises the following steps:
a) (denoted by reference number 146) generating two or three plastic components 124 for a fluid channel 112 in an injection molding process;
b) (denoted by reference number 148) providing at least one fluid pump 118 and arranging the fluid pump 118 on one of the plastic components 124;
c) (denoted by reference number 150) providing at least one heating element 120 and arranging the heating element 120 on one of the plastic components 124;
d) (denoted by reference number 152) joining the two or three plastic components 124 in one or more welding processes, thereby generating the fluid channel 112.

Before performing step d), the method may further comprise one or more of the following steps:
e) (denoted by reference number 154) providing at least one temperature sensor 132 and arranging the temperature sensor 132 on one of the plastic components 124.
f) (denoted by reference number 156) providing at least one mixing valve 130, specifically one or more of a two-way mixing valve and a three-way mixing valve, and arranging the mixing valve 130 on one of the plastic components 124.

As an example, Figure 4a may exemplarily illustrate a first stage of the module manufacturing method after performance of step a) 146. Figure 4b may exemplarily illustrate a second stage of the module manufacturing method after performing steps b) 148, c) 150, e) 154 and f) 156. Figure 4c may exemplarily illustrate a third and final stage of the module manufacturing method after performing step d) 152.

### List of reference numbers

- 110: thermal management module
- 112: fluid channel
- 114: inlet
- 116: outlet
- 118: fluid pump
- 120: heating element
- 122: cooling fluid
- 124: plastic component
- 126: side arm
- 128: feeding line
- 130: mixing valve
- 132: temperature sensor
- 134: carrier component
- 136: lid component
- 138: fluid pump protrusion
- 140: heating element recess
- 142: sensor recess
- 144: valve recess
- 146: step a)
- 148: step b)
- 150: step c)
- 152: step d)
- 154: step e)
- 156: step f)

## Claims

1. A thermal management module (110) for controlling the temperature of a battery pack in a vehicle, the thermal management module (110) comprising
- at least one fluid channel (112) for guiding a cooling fluid (122) through the thermal management module (110), wherein the fluid channel (112) consists of two or three plastic components (124), wherein the fluid channel (112) comprises at least one inlet (114) and at least one outlet (116);
- at least one fluid pump (118) for driving a movement of the cooling fluid (122) through the fluid channel (112), wherein the fluid pump (118) is fixed to the fluid channel (112);
- at least one heating element (120) arranged at least partially within the fluid channel (112), such that the cooling fluid (122) is heatable by the heating element (120).

2. The thermal management module (110) according to the preceding claim, wherein the fluid channel (112) fully encircles the heating element (120) in at least one plane.

3. The thermal management module (110) according to any one of the preceding claims, wherein the heating element (120) is arranged inside the fluid channel (112), such that the heating element (120) is arranged within a flow path of the cooling fluid (122) in the fluid channel (112).

4. The thermal management module (110) according to any one of claims 1 and 2, wherein the heating element (120) protrudes into the fluid channel (112), such that the heating element (120) penetrates a wall of the fluid channel (112).

5. The thermal management module (110) according to any one of the preceding claims, wherein the heating element (120) comprises at least one resistive heat wire.

6. The thermal management module (110) according to any one of the preceding claims, further comprising at least one temperature sensor (132) for measuring the temperature of the cooling fluid (122), wherein the temperature sensor (132) is arranged within the fluid channel (112).

7. The thermal management module (110) according to any one of the preceding claims, further comprising at least one mixing valve (130) for mixing the cooling fluid (122) from different parts of the fluid channel (112), wherein the mixing valve (130) is arranged in a flow path of the fluid channel (112) and fixed to the fluid channel (112).

8. The thermal management module (110) according to the preceding claim, wherein the mixing valve (130) is one or more of a two-way mixing valve and a three-way mixing valve.

9. The thermal management module (110) according to any one of the preceding claims, wherein the material of a first one of the plastic components (124) coincides with the material of a second one of the plastic components (124).

10. The thermal management module (110) according to any one of the preceding claims, wherein at least one of the plastic components (124) of the fluid channel (112) comprises a plastic material selected from the group consisting of a thermoplastic material, such as Polypropylene (PP) and/or Polyamide (PA); a thermosetting material.

11. A module manufacturing method of manufacturing a thermal management module (110), the method comprising:
a) generating two or three plastic components (124) for a fluid channel (112) in an injection molding process;
b) providing at least one fluid pump (118) and arranging the fluid pump (118) on one of the plastic components (124);
c) providing at least one heating element (120) and arranging the heating element (120) on one of the plastic components (124);
d) joining the two or three plastic components (124) in one or more welding processes, thereby generating the fluid channel (112).

12. The module manufacturing method according to the preceding claim, wherein the method, before performing step d), further comprises:
e) providing at least one temperature sensor (132) and arranging the temperature sensor (132) on one of the plastic components (124).

13. The module manufacturing method according any one of the preceding claims referring to a module manufacturing method, wherein the method, before performing step d), further comprises:
f) providing at least one mixing valve (130) and arranging the mixing valve (130) on one of the plastic components (124).

14. The module manufacturing method according to any one of the preceding claims referring to a module manufacturing method, wherein the module manufacturing method is configured for manufacturing a thermal management module (110) according to any one of the preceding claims referring to a thermal management module (110).
